# EUROPEAN PATENT APPLICATION

(11) **EP 3 001 421 A1**
(43) Date of publication of application: **30.03.2016**
(21) Application number: 15161837.8
(22) Date of filing: 31.03.2015
(51) Int. Cl.: G11B 27/10, G11B 27/28, G11B 27/34, G06F 3/16, G06F 17/30, G10L 15/26, G06F 3/0484

(54) **ELECTRONIC DEVICE, METHOD AND STORAGE MEDIUM**

(30) Priority: 29.09.2014 JP 2014198199
(71) Applicant: Kabushiki Kaisha Toshiba, Tokyo 105-8001 (JP)
(72) Inventor: Kikugawa, Yusaku, Tokyo, Tokyo 105-8001 (JP)
(74) Representative: Henkel, Breuer & Partner

(57) **Abstract**

According to one embodiment, an electronic device includes circuitry configured to display, during recording, a first mark (228) indicative of a sound waveform collected from a microphone and a second mark (222) indicative of a section of voice collected from the microphone, after processing to detect the section of voice.

## Description

Embodiments described herein relate generally to an electronic device for recording sound.

Conventionally, there has been a demand for visualizing sound during recording when recording sound by an electronic device. One of the examples is an electronic device for separately displaying voice sections where a human generates voice from non-voice sections (noise section and silent section) other than voice sections. Another example is an electronic device capable of easily confirming a speech content.

In a conventional electronic device, useful information is not offered to the user when visualizing recorded sound.

A general architecture that implements the various features of the embodiments will now be described with reference to the drawings. The drawings and the associated descriptions are provided to illustrate the embodiments and not to limit the scope of the invention.
FIG. 1 is an exemplary plan view illustrating an electronic device of an embodiment.
FIG. 2 is an exemplary block diagram illustrating a system configuration of the electronic device of the embodiment.
FIG. 3 is a diagram illustrating a configuration of a reproducing module of a recording/reproducing program of the electronic device of the embodiment.
FIG. 4 is a diagram illustrating a configuration of a recording module of the recording/reproducing program of the electronic device of the embodiment.
FIG. 5 is an exemplary view illustrating a display screen of sound data at a time of reproducing sound data recorded by the recording/reproducing program of the electronic device of the embodiment.
FIG. 6 is a view illustrating a concept of automatically adjusting a reproduction start location by the recording/reproducing program of the electronic device of the embodiment.
FIG. 7 is a flowchart illustrating processing steps of automatically adjusting a reproduction start location by the record/reproduction program of the electronic device of the embodiment.
FIG. 8 is a waveform chart specifically illustrating the automatic adjustment of the reproduction start location shown in FIG. 7.
FIGS. 9A, 9B, and 9C illustrate examples of a "Before Starting Recording" screen, a "During Recording" screen and a "During Reproduction" screen by the record/reproduction program of the electronic device of the embodiment.
FIG. 10 is an enlarged view of the example of the "Before Starting Recording" screen shown in FIG. 9A.
FIG. 11 is an enlarged view of the example of the "During Reproduction" screen shown in FIG. 9C.
FIG. 12 is an exemplary view illustrating a dual screen display where a screen is divided into two sections by display switching.
FIG. 13 is an exemplary view illustrating a file list display.
FIG. 14 is an exemplary view illustrating a time bar which the "During Reproduction" screen displays.
FIG. 15 is an enlarged view of the example of the "During Recording" screen shown in FIG. 9B.
FIG. 16 is an exemplary view illustrating a snap view screen.
FIG. 17 is another exemplary view illustrating the "During Recording" screen.
FIG. 18 is an exemplary view illustrating deletion of part of a section recorded sound data.
FIG. 19 is an exemplary view illustrating cutting (trimming) necessary information of sound data.
FIG. 20 is still another exemplary view illustrating the "During Recording" screen.
FIG. 21 is an exemplary flowchart illustrating processing for displaying the "During Recording" screen shown in FIG. 20.
FIG. 22 is yet another exemplary view illustrating the "During Recording" screen.
FIG. 23A and FIG. 23B illustrate further examples of the "During Recording" screen.
FIG. 24A and FIG. 24B illustrate still further examples of the "During Recording" screen.

Various embodiments will be described hereinafter with reference to the accompanying drawings.

In general, according to one embodiment, an electronic device includes circuitry configured to display, during recording, a first mark indicative of a sound waveform collected from a microphone and a second mark indicative of a section of voice collected from the microphone, after processing to detect the section of voice.

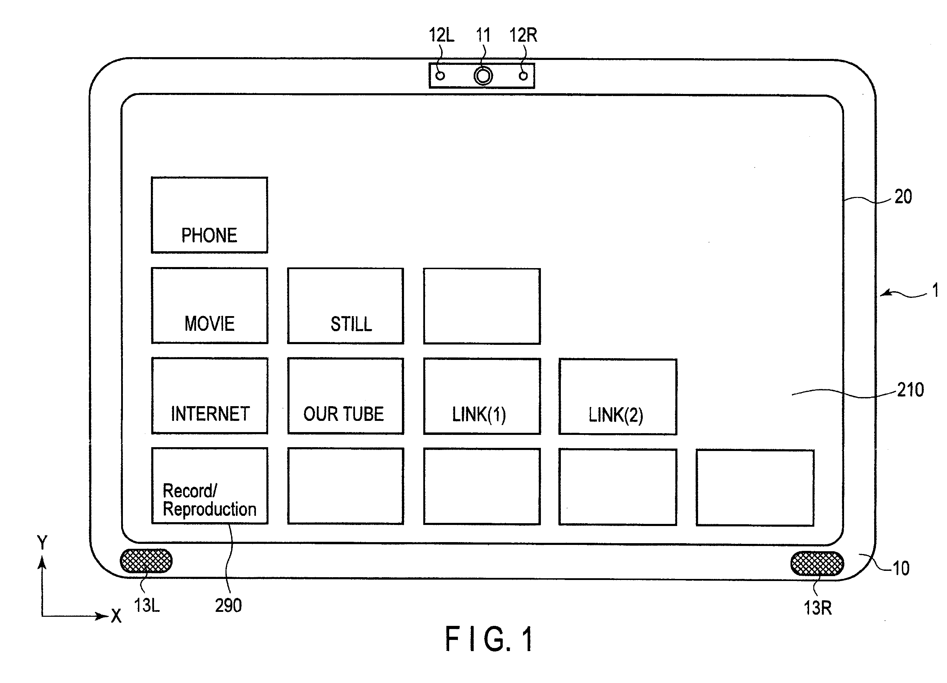

FIG. 1 is an exemplary plan view illustrating an electronic device 1 of an embodiment. The electronic device 1 is, for example, a tablet-type personal computer (portable personal computer [PC]), a smartphone (multi-functional portable phone device) or a personal digital assistant (PDA). A tablet-type personal computer will hereinafter be described as the electronic device 1. While the elements and configurations described below can be realized by hardware, they can be realized also by software executed by a microcomputer (processing device or central processing unit [CPU]).

The tablet-type personal computer (hereinafter abbreviated as tablet terminal device) 1 includes a main unit (PC main body) 10 and a touch screen display 20. The touch screen display 20 is on the front surface of the PC main body 10.

In a predetermined location of the front surface of the PC main body 10, for example, in the upper center portion, is provided a camera unit 11 which captures, as video (image information), the information of a shooting target that exists ahead of the touch screen display 20, such as the user, the user and a background thereof, and an object located around the user. In another predetermined location of the front surface of the PC main body 10, for example, in the right and left of the camera unit 11, are provided first and second microphones 12R and 12L which input voice generated by the user or by an optional number of persons who exist around the user and/or input sound around noise, wind, etc. (both voice and sound may hereinafter be referred to as sound). The first and second microphones 12R and 12L, for example, make the camera unit 11 a virtual center and are located substantially in the same distance from the camera unit 11. In the embodiment, while it is exemplified that two microphones are provided, the number of microphones provided may be one. When two microphones are provided, it is possible to estimate the input direction of sound and therefore identify the speaker based on the result of estimation.

In still another location of the PC main body 10, for example, in the right and left ends of the lower end, are provided speakers 13R and 13L which reproduce sound recorded in the PC main body 10. Although not described in detail, in yet another predetermined location of the PC main body 10 are provided a power-on switch (power button), a lock mechanism, a certification unit, etc. The power button (power-on switch) controls power on/off for enabling the use of the tablet terminal device 1 (booting the tablet terminal device 1). The lock mechanism locks an operation of the power button (power-on switch) at the time of carrying, for example. The certification unit detects (biological) information associated with the user's finger or palm, for example, in order to certificate the user.

The touch screen display 20 includes a liquid crystal display unit (LCD) 21 and a touch panel (unit for receiving instruction input) 22. The touch panel 22 is provided in a predetermined location of the PC main body 10 so as to cover at least the display surface (screen) of the LCD 21.

The touch screen display 20 detects the location of instruction input (touch location or contact location) on the display screen contacted by an external object (a touch pen or a part of the user's body such as finger). The touch screen display 20 has (supports) a multi-touch function capable of detecting a plurality of instruction input locations simultaneously. While the external object may be a touch pen or a part of the user's body such as finger as described above, the user's finger will be exemplified in the following description.

The touch screen display 20 is used as a main display for displaying the screen or image display (object) of each type of application programs in the tablet terminal device 1. When the PC main body 10 is booted, the touch screen display 20 receives starting execution (booting) of an optional application program that the user is attempting to boot and displays the icons for an optional number of application programs. The orientation of the display screen of the touch screen display 20 can be switched between lateral orientation (landscape) and longitudinal orientation (portrait). FIG. 1 shows an example of displaying a booting complete screen in landscape.

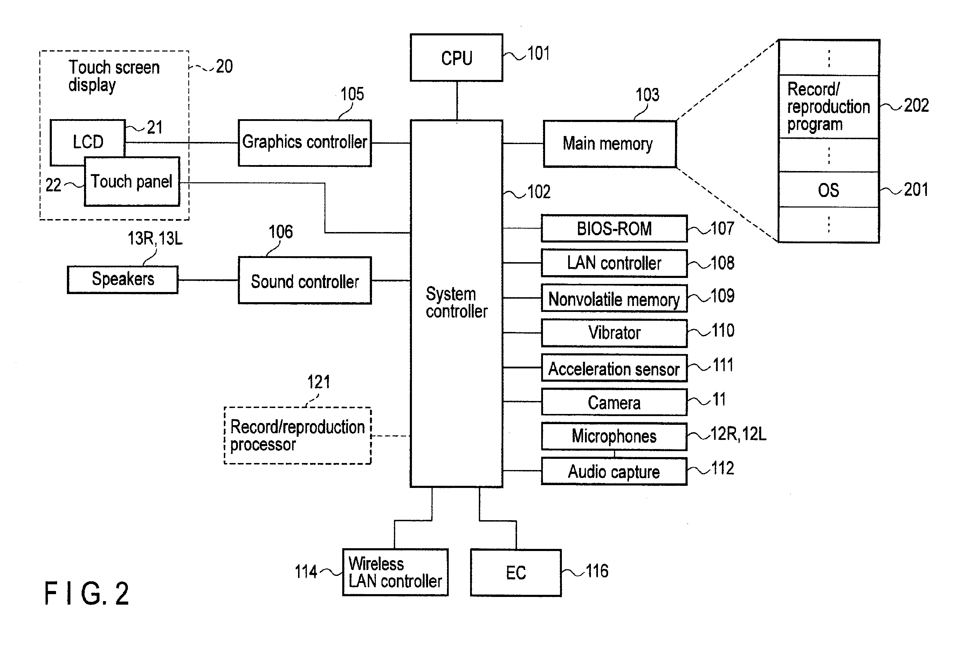

FIG. 2 is an exemplary diagram of a system configuration of the tablet terminal device 1 of the embodiment.

The PC main body 10 of the tablet terminal device 1 includes, a central processing unit (CPU) 101, a main memory 103, a graphics controller 105, a sound controller 106, a BIOS-ROM 107, an LAN controller 108, a nonvolatile memory 109, a vibrator 110, an acceleration sensor 111, an audio capture (board) 112, a wireless LAN controller 114, an embedded controller (EC) 116, etc., all of which are connected to a system controller 102.

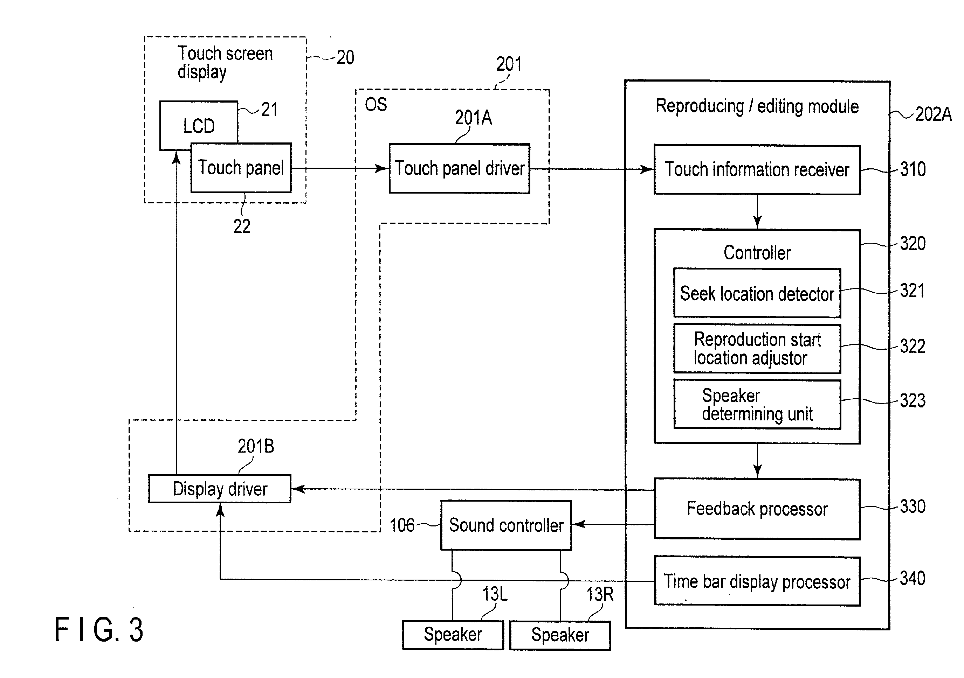

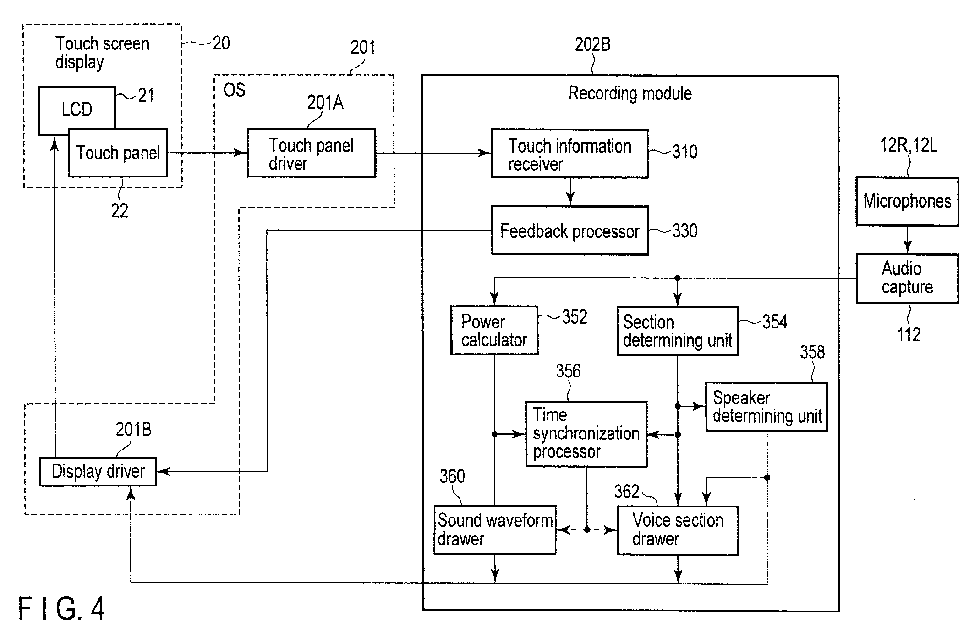

The CPU 101 controls the operation of each unit of the PC main body 10 and the touch screen display 20. That is, the CPU 101 executes an operating system (OS) 201 and each type of application programs which are loaded from the nonvolatile memory 109 to the main memory 103. One of the application programs includes a record/reproduction program roughly shown in FIGS. 3 and 4. A record/reproduction program 202 is software executed on the operating system (OS) 201. The record/reproduction function can also be realized by hardware, not software, by means of a record/reproduction processor 121 constituted by a single-chip microcomputer, etc.

The CPU 101 also executes the BIOS stored in the BIOS-ROM 107. The BIOS is a program for hardware control.

The system controller 102 is equipped with a memory controller for performing access control for the main memory 103. The system controller 102 has a function to execute communication with the graphics controller 105 via, for example, a serial bus conforming to the PCI EXPRESS standard.

The graphics controller 105 is a display controller for controlling the LCD 21 of the touch screen display 20 of the PC main body 10. A display signal generated by the graphics controller 105 is transmitted to the LCD 21 and then the LCD 21 displays video based on the display signal. The touch panel 22 which is located on the LCD 21 is a pointing device (user operation instruction input mechanism) for inputting an input signal corresponding to display on the screen of the LCD 21. The user can input a user instruction via the touch panel 22 to a graphical user interface (GUI), etc., displayed on the screen of the LCD 21 and can thereby operate the PC main body 10. That is, the user can instruct execution of a function corresponding to a booting icon or button by touching, via the touch panel 22, the booting icon or button displayed by the LCD 21.

The system controller 102 is equipped with a USB controller for controlling each type of USB devices. The system controller 102 also has a function to execute communication with the sound controller 106 and the audio capture 112. Image data (movie/still image) acquired (shot) by the camera 11 is converted into a predetermined format and supplied via the system controller 102 to an image processing program that operates on the main memory 103. Therefore, image data from the camera 11 is reproduced in the image processing program that is booted upon the user's request and that can reproduce an image in a format corresponding to the image data from the camera 11, and is then displayed in the LCD 21. The image data from the camera 11 is stored in, for example, the nonvolatile memory 109.

The sound controller 106 is a sound source device for converting sound data subject to reproduce into analogue output and then outputs it to the speakers 13R and 13L.

The LAN controller 108 is a wire communication device for executing wire communication in the IEEE 802.3 standard.

The vibrator 110 imparts vibration to the PC main body 10 as necessary.

The acceleration sensor 111 detects the rotation of the PC main body 10 for switching between portrait and landscape of the display screen of the touch screen display 20, the strength of impact of the movement of the user's finger, etc.

The audio capture 112 converts voice and sound acquired each from the microphone 12R (located, for example, on the right of the camera 11) and the microphone 12L (located, for example, on the left of the camera 11) from analogue into digital, and outputs the digital signal. The audio capture 112 can input information indicating to which microphone a high-level input signal is transmitted, to the record/reproduction program 202 which operates on the main memory 103 via the system controller 102. The record/reproduction program 202 can estimate the direction of the speaker based on this information. The audio capture 112 can share a part or the whole of predetermined preprocessing available in the record/reproduction program 202.

The wireless LAN controller 114 is a wireless communication device for executing wire communication in the IEEE 802.11 standard.

The EC 116 is a single-chip microcomputer including an embedded controller for power management. The EC 116 controls power-on/off of the PC main body 10 in accordance with the user's operation of the power button.

Next, an exemplary configuration of the record/reproduction program 202 will be described. The record/reproduction program 202 has a function to record sound, a function to reproduce sound and a function to edit recorded sound. In the following, a unit for recording and a unit for reproducing/editing will be separately described. To begin with, a reproducing/editing module 202A of the record/reproduction program 202 will be described with reference to FIG. 3. The record/reproduction module 202A includes, as a functional module for achieving a reproducing/editing function, at least a touch information receiver 310, a controller 320, a feedback processor 330 and a time bar display processor 340.

The touch information receiver 310 receives, for each instruction of the user (movement of the user's finger), first coordinate information, second coordinate information and information of the movement of the user's finger from the touch panel 22 via a touch panel driver 201A, and then outputs them to the controller 320. The first coordinate information is coordinate information (x, y) of an optional location of the display surface of the touch panel 22 on which the user's finger contacts. The second coordinate information is coordinate information (x', y') of a location where the user's finger is separated from the display surface of the touch panel 22. The information of the movement of the user's finger includes, for example, information of the movement of the user's finger between the first coordinate information (x, y) and the second coordinate information (x', y') or information of the movement of the user's finger of the second coordinate information, such as information of the orientation when the finger is separated.

In the embodiment, the user's operation inputs (the movement of the user's finger) and the names are as follows:
[1] Touch: the user's finger is in a predetermined location on the touch panel 22 for a certain period (the first coordinate information and the second coordinate information are substantially the same and are separated in a direction substantially orthogonal to the display surface after a certain time passes);
[2] Tap: the user's finger contacts an optional location on the display surface of the touch panel 22 for a predetermined time and then is separated in a direction substantially orthogonal to the display surface (tap may be treated synonymously with touch);
[3] Swipe: the user's finger contacts an optional location on the display surface of the touch panel 22 and then moves in an optional direction (including the information of finger movement between the first coordinate information and the second coordinate information, i.e., the user's finger moves on the display surface so as to trace the display surface);
[4] Flick: the user's finger contacts an optional location of the display surface of the touch panel 22, moves so as to be swept in an optional direction and then is separated from the display surface (accompanied by information of direction when the user's finger is separated from the display surface during tapping); and
[5] Pinch: the user's two fingers contact an optional location of the touch panel 22 to change the distance between the fingers on the display surface. In particular, to extend the distance between the fingers (spread the fingers) may be referred to as pinch out and to narrow the distance between the fingers (close the fingers) may be referred to as pinch in, respectively.

The controller 320 boots a program (application) corresponding to the user's operation (user's instruction input) identified by information of the movement of the user's finger of the above-mentioned [1] to [5], based on the first coordinate information, the second coordinate information and the information of the movement of the user's finger. The controller 320, in either a keyboard mode or a mouse mode which will be described later, executes an application (program) corresponding to the instruction input from the user (user input) based on the first coordinate information, the second coordinate information and the information of the movement of the user's finger from the touch information receiver 310. While touch [1] may be an operation in accordance with tap [2], it is assumed in the embodiment that the controller 320 determines as swipe [3] the user's finger moving on the display surface of the touch panel 22 after touching. The controller 320 is supposed to determine as swipe [3] or flick [4] when receiving the coordinate information (x', y') of the location where the user's finger is separated from the touch panel 22. The controller 320 can calculate a swipe length (length of instruction section) where the user's finger traces (swipes) the display surface of the touch panel 22 based on the first coordinate information, the second coordinate information and the information of the movement of the user's finger from the touch panel 22. That is, the length of instruction section (swipe length) can be calculated as a length of a section where a seek location is a base point in editing sound data, which will be described later.

In the keyboard mode, it is generally possible to use the touch screen display 20 as a virtual keyboard by outputting a peculiar character code to a corresponding individual key in accordance with tapping from the touch panel 22 to an image of keyboard layout which is displayed by the LCD 21. The mouse mode is an operation mode for outputting relative coordinate data that shows the direction and distance of the movement of the (finger's) contact location on the touch panel 22 according to the movement.

For example, when the user touches a record/reproduction icon 290 (see FIG. 1) of predetermined icons (or button displays) which are displayed on the display surface of the touch panel 22, the controller 320 boots an application related to the record/reproduction icon 290 corresponding to the coordinate information of a location of the display surface of the user's finger.

The controller 320 includes, as a reproducing/editing functional module of the record/reproduction program 202, a seek location (user-designated location) detector 321, a reproduction start location adjustor 322, a speaker determining unit 323, etc.

The seek location detector 321 identifies a seek location based on the first coordinate information, the second coordinate information and the information of the movement of the user's finger from the touch information receiver 310.

That is, the seek location detector 321 identifies, on X-Y plane displayed by the LCD 21, a seek location corresponding to the user's instruction on a time bar display where a time axis corresponds to X-axis.

The reproduction start location adjustor 322 buffers sound data near a seek location identified by the seek location detector 321, detects a silent section which is the beginning of the voice section near the seek location, and sets an automatically-adjusted location which is used as a reproduction start location.

The speaker determining unit 323 identifies the speaker as to sound data divided by using a silent section detected by the reproduction start location adjustor 322.

The method for identifying a speaker is described in detail in, for example, Jpn. Pat. Appln. KOKAI Publication No. 2011-191824 (Japanese Patent No. 5174068) and therefore will not hereinafter be described in detail.

The feedback processor 330 is to be connected to a display driver 201B (which is firmware of the OS 201 and is a graphics controller 105 in FIG. 2), which is incorporated in the OS 201, and the sound controller 106, respectively.

The feedback processor 330 controls the sound controller 106 to change the output proportion of reproduced sound that is output by the speakers 12R and 12L based on, for example, the speaker's location corresponding to sound data during reproducing, so that the location of the speaker during recording can be imaginary reconstructed.

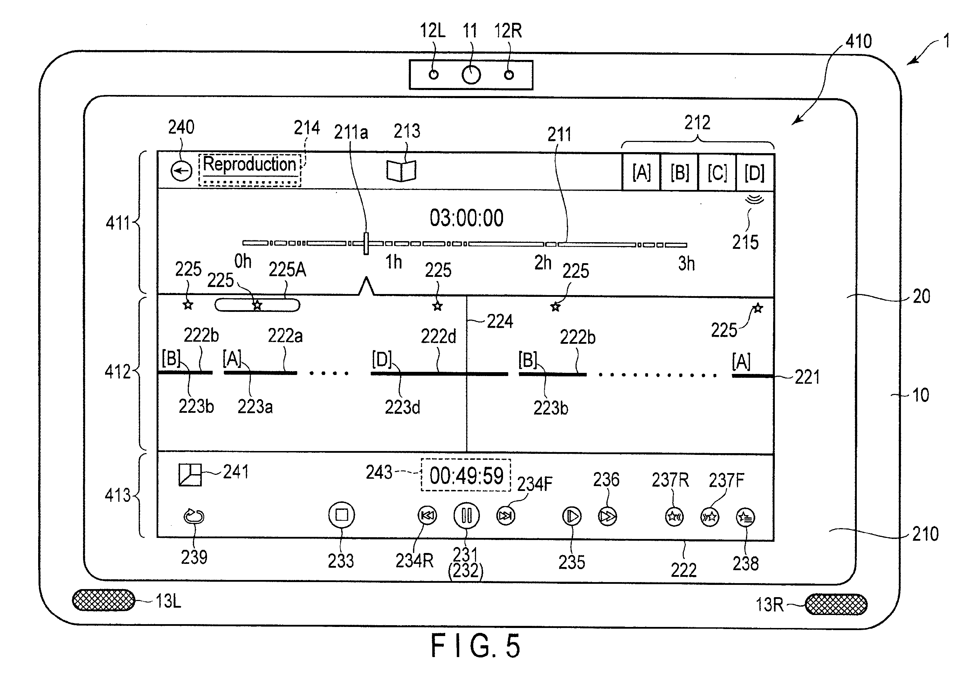

While the feedback processor 330 will be described later with reference to the examples of screens shown in FIGS. 5 and 8 to 16, the feedback processor 330 processes a display signal for displaying various information on a screen 210 of the PC main body 10 and processes a sound output signal to be reproduced in the record/reproduction program 202.

The time bar display processor 340 is a functional module for performing on-screen display (OSD) for a time bar 211 on an image display corresponding to the display surface of the touch panel 22, in the display driver 201B which is incorporated in the OS 201 and is firmware of the OS 201.

FIG. 4 illustrates an exemplary configuration of a recording module 202B of the record/reproduction program 202.

The record/reproduction module 202B includes, as a functional module for achieving a sound recording function, at least the touch information receiver 310, the feedback processor 330, a power calculator 352, a section determining unit 354, a time synchronization processor 356, a speaker identifying unit 358, a sound waveform drawer 360 and a voice section drawer 362.

The touch information receiver 310 and the feedback processor 330 are the same as those of the reproducing/editing module 202A.

Sound data from the microphones 12R and 12L is input to the power calculator 352 and the section determining unit 354 via the audio capture 112. The power calculator 352 calculates, for example, a root mean square for the sound data of a certain time interval and uses the result of calculation as power. The power calculator 352 may use, as power, the amplitude maximum value of sound data of a certain time interval instead of a root mean square. Since a certain time is several milliseconds, power is calculated almost in real time. The section determining unit 354 performs voice activity detection (VAD) for sound data to divide the sound data into voice sections where a human generates voice and non-voice sections (noise section and silent section) other than voice sections. As for another example of section detection, a voice section for each speaker may be calculated by identifying the speaker of a voice section, in addition to simply by dividing into voice section and non-voice section. If two or more microphones are incorporated, a speaker can be determined based on the result of estimating the direction of sound from the difference between the input signals of two microphones. Even when the number of microphones is one, it is possible to present speaker information in addition to determination of voice section or non-voice section by calculating feature amount such as Mel Frequency Cepstral Coefficient (MFCC) and performing cluster analysis for the feature amount. It is possible to present larger amount of information to the user by identifying a speaker. In the section determining unit 354, since it takes several seconds to calculate, the result of section determination cannot be acquired in real time and is delayed for approximately one second.

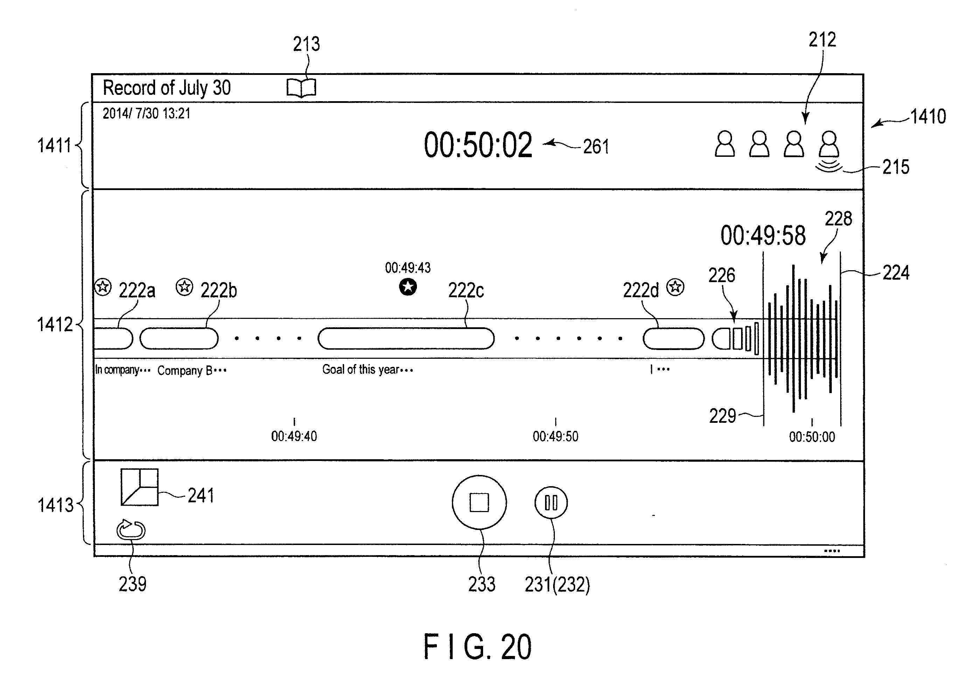

The output of the power calculator 352 and the section determining unit 354 is supplied to the sound waveform drawer 360 and the voice section drawer 362, respectively, and is also supplied to the time synchronization processor 356. As described above, while power calculation is executed almost in real time and output for a certain time interval, voice section determination requires approximately one-second calculation time. The determination of voice section or non-voice section is performed for each sound data that exceeds a certain time. Since the processing of the power calculator 352 and that of the section determining unit 354 thus differ in processing time, delay may occur in the output of the power calculator 352 and the section determining unit 354. The output of the power calculator 352 is displayed as waveform that represents power level of the sound data and the output of the section determining unit 354 is displayed by a bar that represents a voice section. When a waveform and a bar are displayed in the same row, both drawing start timings differ. Therefore, in this case, a waveform is displayed initially and a bar is displayed from a certain timing. The time synchronization processor 356 gradually switches from waveform display to bar display, not performs the display switching in a moment. Specifically, a switching area of waveform display and bar display is provided with a waveform/bar transition part 226, which will be described later in FIG. 20.

The sound waveform drawer 360 and the voice section drawer 362 correspond to the time bar display processor 340 and the output thereof is supplied to the display driver 201B. The output of the speaker determining unit 358 is also supplied to the display driver 201B.

FIG. 5 is an exemplary view illustrating a sound data display screen in a state where the record/reproduction program 202 is booted. The example of screen of FIG. 5 shows a time when sound data recorded by the record/reproduction program 202 is reproduced.

A sound data display screen 410, which is displayed on the screen 210 of the PC main body 10 when the record/reproduction program 202 operates, includes three display areas, i.e., a first display area 411, a second display area 412 and a third display area 413, into which the sound data display screen 410 is roughly divided in a vertical direction of the screen. The first display area 411 relates to a status and information displayed and is referred to as, for example, [record name, recognized speaker/whole view, status] section. The second display area 412 is referred to as, for example, [enlarged view, status] section from the content of a status and information displayed. The third display area 413 relates to a status and information displayed and is referred to as, for example, [control] section.

The first display area 411 displays the time bar 211 which shows the whole of a sound content (sound data) during reproduction (subject to reproduce) and a locator 211a (sound reproduction location display) which shows the current display location or the reproduction start location of sound instructed by the user among sound contents. The locator 211a locates a reproduced time (elapsed time) from the beginning of a content in a location distributed in proportion for the total time displayed by the time bar 211.

The first display area 411 includes, for example, a speaker display area 212 which displays an identified speaker for each speaker, a list display button 213 for displaying list display, a record section 214 which displays the name of a record, a return button 240, etc.

The speaker display area 212 can display up to ten identified speakers by alphabet such as [A] to [J] during reproduction (FIG. 5 is an example of displaying four persons of [A] to [D]). By a speech mark 215, the speaker display area 212 can display a speaker who is currently speaking.

The second display area 412 includes, for example, a reproduction location display section 221 which displays the reproduction location (time) of a sound content (sound data), speech bars 222a, 222b, ..., 222n (n is a positive integer) which show voice sections, speaker identifiers 223a, 223b, ..., 223n (n is a positive integer), a current location mark (line) 224, a marking button (star mark) 225, etc.

In the reproduction location display section 221, the left of the current location mark (line) 224 shows a time (sound data) which has already been reproduced and the right of the current location mark (line) 224 shows a time (sound data) to be reproduced, at the time of reproducing.

The speech bars 222a, 222b, ..., 222n relate the length (time) of voice data for each speaker to a speaker and display them on the reproduction location display section 221. Therefore, the speaker identifiers 223a, 223b, ..., 223n (n is a positive integer) are closely attached to the speech bars 222a, 222b, ..., 222n. The current location mark (line) 224 shows a current location (time) on the reproduction location display section 221. By means of the speech bars 222a, 222b, ..., 222n, the user can select voice data for each speaker subject to reproduce by a swipe operation. At this time, it is possible to change the number of speaker sections (speech bars) to be skipped according to strength of swipe (movement of finger) at the time of swiping (degree of change in speed/pressure, i.e., change in speed/pressure when the user's finger moves on the display surface).

The marking button 225 is displayed substantially near the center of a length direction (time) of the speech bar 223 (223a to 223n) for each speaker. By tapping near the marking button 225, it is possible to perform marking per speech. For example, when the marking button 225 is selected, the color of an elongated area 225A corresponding to a voice section near the marking button 225 changes, which shows being marked. By tapping again near the marking button 225 which has been marked once, unmarking is performed to erase the elongate area 225A so that only the star mark is left. Marking information can be used for finding the beginning for reproducing to enhance convenience of reproduction.

The third display area 413 includes a pause button 231 / a reproduction button 232, a stop button 233, a skip button (forward) 234F, a skip button (return) 234R, a slow reproduction button 235, a fast reproduction button 236, a mark skip button (forward) 237F, a mark skip button (return) 237R, a mark list display button 238, a repeat button 239, etc. The third display area 413 also includes a display switch button 241 with which the user can input an instruction of display switch to switch the display format of the screen 210 between the screen 210 and a snap view screen, which will be described later.

The pause button 231 / the reproduction button 232 are in a toggle mode where the reproduction button 232 and the pause button 231 are displayed alternately. By touching or tapping the reproduction button 232, the selected sound data (content) starts to be reproduced. The pause button 231 is displayed when a content is reproduced by the reproduction button 232. Therefore, when the pause button 231 is touched or tapped, the reproduction of a content temporarily stops to display the reproduction button 232.

The stop button 233 stops the reproduction of a content during reproduction or pause.

By touching or tapping the skip button (forward) 234F or the skip button (return) 234R, the speech bars 222a, 222b, ..., 222n are skipped. When the skip button (forward) 234F is touched or tapped, the speech bars 222a, 222b, ..., 222n are moved to the left so that the start of the next speech bar is positioned at the current location mark (line) 224. When the skip button (return) 234R is touched or tapped, the speech bars 222a, 222b, ..., 222n are moved to the right so that the start of the current speech bar is positioned at the current location mark (line) 224. When the skip button display is tapped, a control command capable of skipping can be input per speech. It is assumed that skipping can be performed only per speech (jumping to the beginning of next voice section [speech bar] after skipping).

The slow reproduction button 235 has a function to perform slow reproduction of 0.5-times or 0.75-times speed for sound data during reproduction. By tapping the slow reproduction button 235, for example, 0.75-times (three-fourth) speed reproduction, 0.5-times (one-half) speed reproduction and normal speed reproduction are repeated sequentially.

The fast reproduction button 236 performs fast reproduction of 1.25-times, 1.5-times, 1.75-times or 2.0-times speed for sound data during reproduction. By tapping the fast reproduction button 236, for example, 1.25-times (five-fourth) speed reproduction, 1.5-times (three-halves) speed reproduction, 2.0-times speed reproduction and normal speed reproduction are repeated sequentially. Either in slow reproduction or fast reproduction, it is preferable that a status (for example, display of x-times reproduction) be displayed in a predetermined display area.

The mark skip button (forward) 237F and the mark skip button (return) 237R have a function to skip to a marked speech bar. That is, when the mark skip button (forward) 237F is touched or tapped, the speech bars 222a, 222b, ..., 222n are moved to the left so that the start of the next marked speech bar is positioned at the current location mark (line) 224. When the mark skip button (return) 237R is touched or tapped, the speech bars 222a, 222b, ..., 222n are moved to the right so that the start of the previous marked speech bar is positioned at the current location mark (line) 224. It is thereby possible to access to marked speech in a short time.

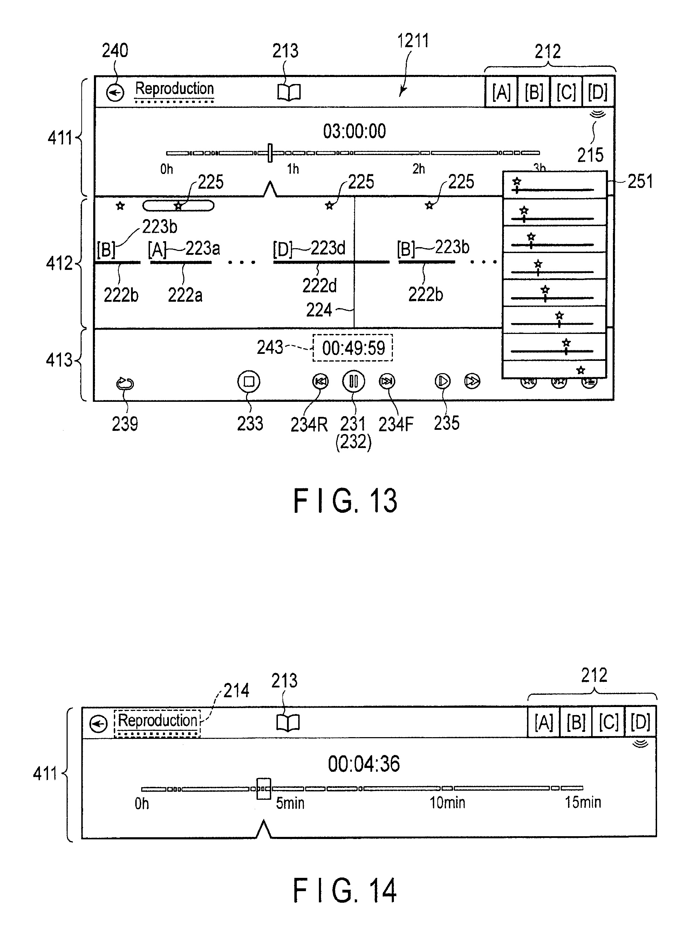

The mark list display button 238, which will be described later with reference to FIG. 13, displays all the speech bars to which the marking button 225 is given (regardless of presence or absence of elongated area 225A) as a file list display 251 by pop-up display.

The repeat button 239 has a function to repeat and reproduce voice data corresponding to a speech bar that is currently reproduced.

The return button 240 has a function to input to the system controller 102 a control signal for returning to the previous operation state.

The display switch button 241 has a function to input display switch to switch the display format of the screen 210 between the screen 210 and a snap view screen.

In the following, an automatically-adjusted location which will be described later is set under control of the reproduction start location adjustor 322 which has been described in FIG. 3 when the user's finger contacts the locator 211a and the finger is separated in an optional location where the finger is swiped in the time axis direction of the time bar 211.

The above-mentioned various displays shown in FIG. 5 are displayed in the LCD 21 under control of the feedback processor 330 which has been described in FIG. 3. Various display signals which are output from the feedback processor 330 may output video signals (display signals) for identifiably displaying a speaker of a voice which is currently reproduced with the identifiers 223a, 223b, ..., 223n for each speaker. In addition, display signals which are output from the feedback processor 330 may change the background colors of displaying the identifiers 223a, 223b, ..., 223n for each speaker corresponding to a speaker of a voice which is currently reproduced shown on the display section 221 of the reproduction location of voice data, in order to facilitate visible identification of each speaker. Further, the feedback processor 330 may output a video signal (display signal) capable of performing optional display such as changing the brightness in the identifier of the speaker or blinking the identifier of the speaker. Furthermore, the feedback processor 330 may display the speech mark 215 near the identifier of the speaker.

Regarding a display signal that is output from the feedback processor 330, a video signal (display signal) for displaying, for example, the common display color, may be output for the identifier of each speaker in the display of the display section 221 (second display area 412) of the reproduction location (time) of voice data and the display of the speaker display area 212, respectively.

In FIG. 5, the time bar 211 displays; in a predetermined length, the beginning location (00:00) to the end location ([hr]:[min], for example, 3:00) of a content during reproduction in the display area of the LCD 21 of the touch screen display 20. The locator 211a displays, on the time bar 211, an elapsed time (elapsed state) from the beginning location to the current reproduction location of a content during reproduction in a location from the beginning location of a content where the whole length of the time bar 211 is distributed in proportion. Therefore, the amount of movement of the locator 211a depends on the whole length of the time bar 211, i.e., the total time of a content during reproduction. Thus, in the record/reproduction program 202, when the user seeks and reproduces the locator 211a on the reproduction location of a content during reproduction, the reproduction start location of sound can be automatically adjusted to a predetermined location near a location designated by the user.

On the screen 210 shown in FIG. 5, while only touch and drag operations can be performed for the information and status displayed by the first display area 411, instruction input by a swipe operation can be performed for the information and status displayed by the first display area 412. That is, the record/reproduction program 202 can operate sound data by swipe. At this time, the number of voice sections to be skipped can be changed according to strength of swipe.

Next, the automatic adjustment of a reproduction start location at the time of reproducing sound data by the record/reproduction program 202 will be described. An exemplary operation of the controller 320 will be described on the assumption that the record/reproduction program 202 is executed by the record/reproduction icon 290 shown in FIG. 1 to input an instruction of booting the record/reproduction program 202.

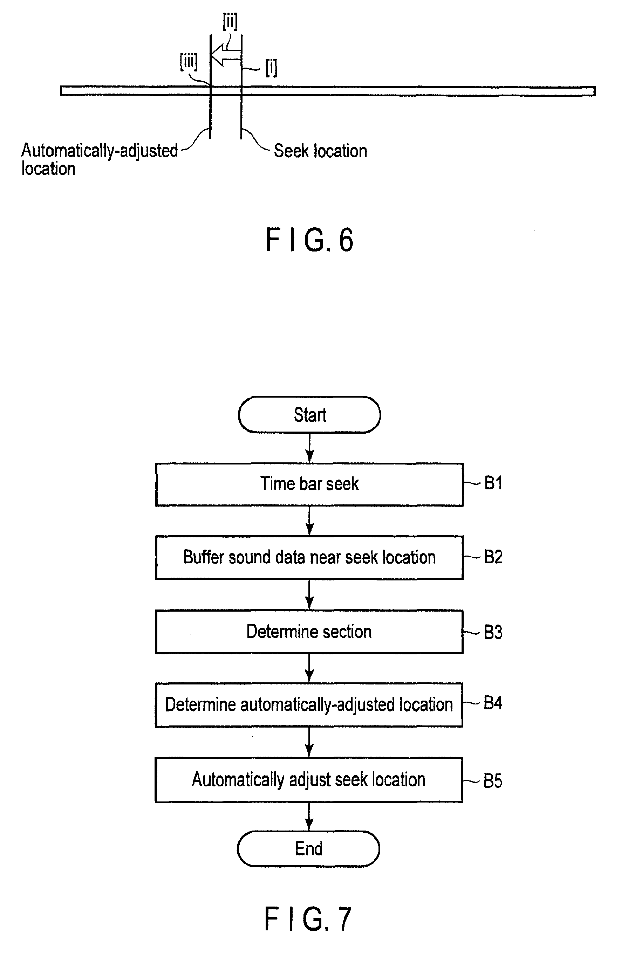

FIG. 6 illustrates the concept of automatic adjustment of automatically adjusting a reproduction start location when sound is reproduced.

A seek location (FIG. 6, [i]) is identified by the user's moving (swiping) the locator 211a on the time bar 211 shown in FIG. 5 to separate the finger from the touch panel 22 in an optional location. It goes without saying that the identification of a seek location is performed by the seek location detector 321 of the controller 320 shown in FIG. 3.

Next, sound data near a seek location (FIG. 6, [ii]) is buffered to detect a silent section, which is the beginning of the voice section near the seek location. Thus, an automatically-adjusted location (FIG. 6, [ii]) used as a reproduction start location is set. That is, a reproduction start location in the record/reproduction program 202 is automatically adjusted. The automatic adjustment of a reproduction start location is performed by the reproduction start location adjustor 322 of the controller 320, as described above.

The flowchart of automatic adjustment of a reproduction start location shown in FIG. 6 will be described with reference to FIG. 7. The time bar 211 and the locator 211a correspond to the examples of display shown in FIG. 5.

In block B1, a location where the locator 211a on the time bar 211 has been moved by the user is temporarily stored as a seek location (user-designated location).

In block B2, sound data near the sound data of the seek location is buffered.

In block B3, it is determined for the buffered sound data that a range where its amplitude is smaller than the absolute value of threshold γ is a silent section.

In block B4, it is determined (identified) from which location of in which silent section to start reproducing, for the sound data determined as silent section.

In block B5, the identified silent section (location) is automatically adjusted as a reproduction start location.

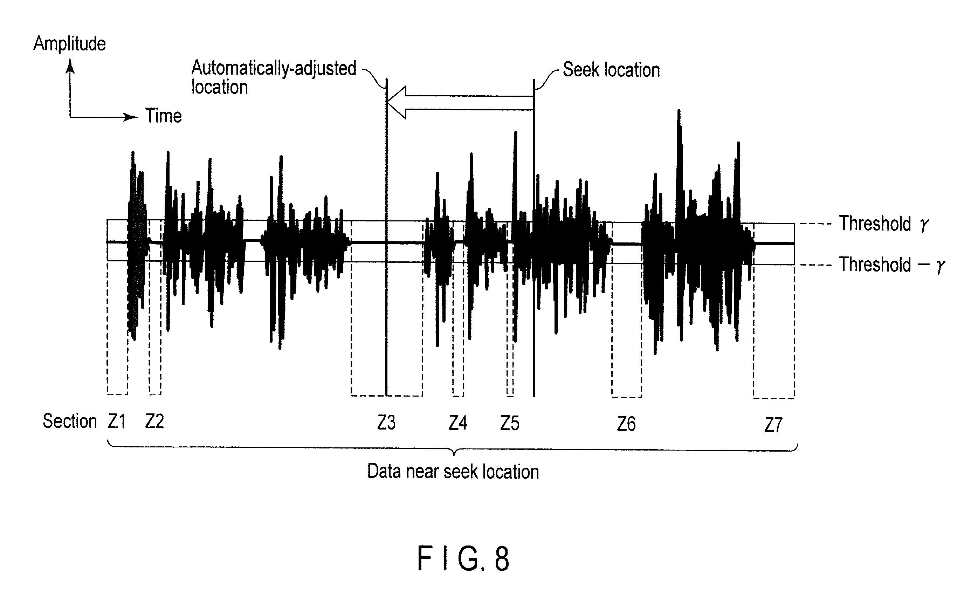

FIG. 8 is a waveform chart specifically illustrating the automatic adjustment of the reproduction start location shown in FIG. 7.

The beginning of voice data (a group of voice) ahead of (earlier than) at least the seek location on a time axis is detected from a seek location identified by the user's operation. A group of voice shows an interval that can be divided as a silent section, which will be described in the following, of the speech (vocalization) of an optional speaker. A group of voice may be conversation, meeting and music performance by a plurality of users or may be switching of scenes in a program (content) of television broadcast.

In order to detect the beginning of voice data, sound data is initially buffered in a predetermined time including temporal change mainly before and after a seek location.

Next, regarding the buffered sound data, a range where its amplitude is smaller than the absolute value of threshold γ, i.e., from threshold γ to threshold -γ, is detected as a silent section Z.

In the following, consecutive numbers are counted for sound data determined as silent section to estimate silent sections Zs (s = 1, 2, 3, ..., n; n is a positive integer) (to identify one division or more). Lastly, a reproduction start location is automatically adjusted for any of silent sections Zs.

As to which section to be selected from silent sections Zs (which section to be reproduced), it may be a section which is the closest to a seek location or may be a section where a silent section is the longest. In addition, an optimal value of switch of a conversation (length of silent section) may be evaluated in advance so that a section accompanied with a silent section which is the closest to the length of the evaluated silent section is treated as a reproduction start location. The length of a silent section is, for example, 3 to 4 seconds, 2 to 3 seconds or 1 to 2 seconds. As to which location to be sought in a silent section (which location of a silent section to be treated as a reproduction start location), it may be any of the middle point, the end point, the beginning, etc, of the silent section.

Next, the reproducing and recording of sound recorded by the record/reproduction program 202 and the setting before recording will be described together with the example of display of the image display 210 of the display surface of the touch panel 22 of the PC main body 10.

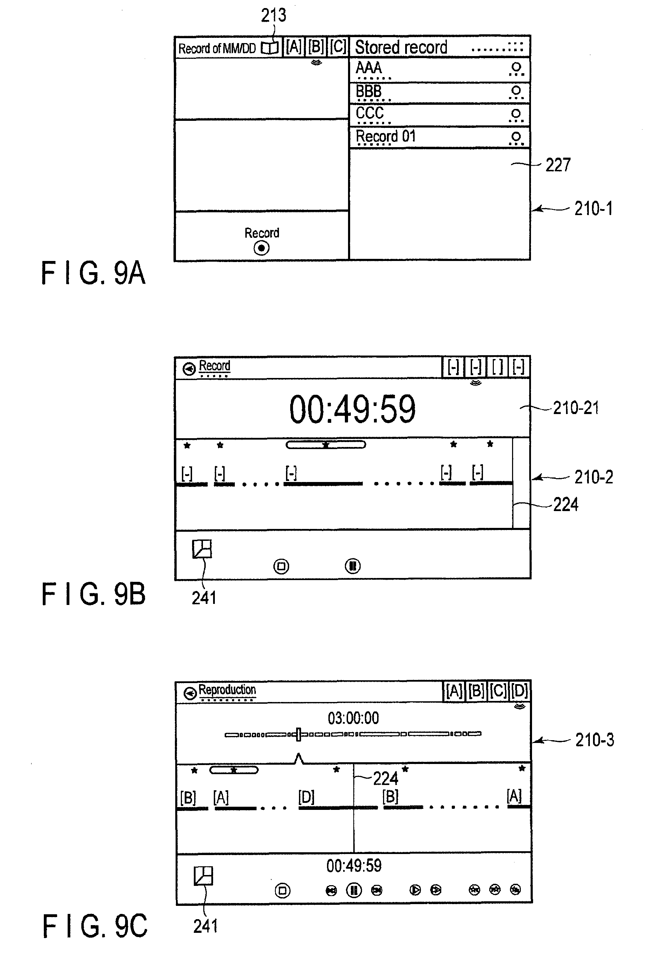

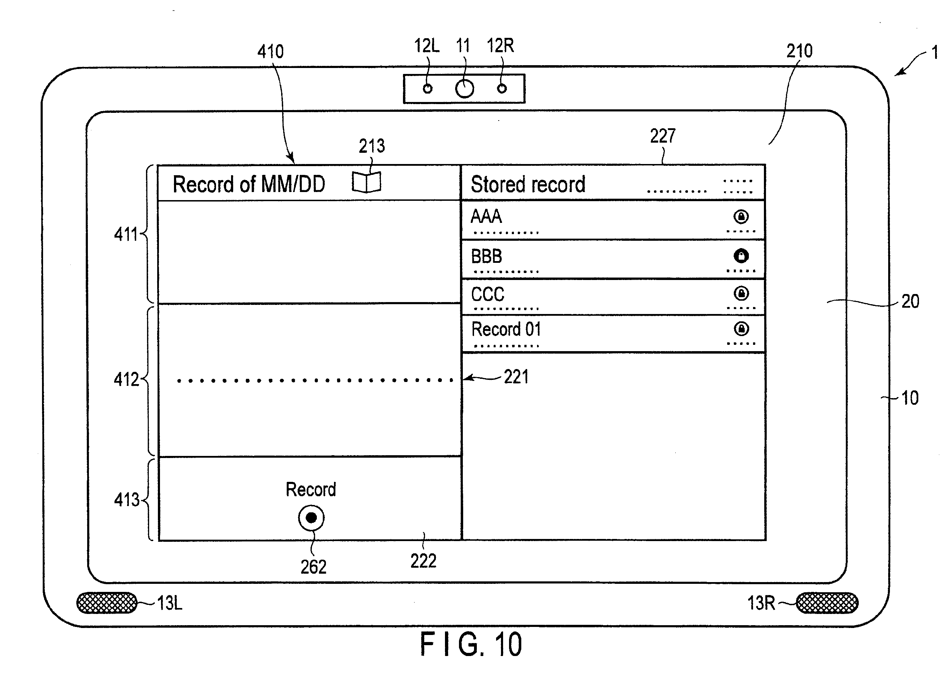

The screen during reproduction which has already been described in FIG. 5 corresponds to a "During Reproduction" screen 210-3 (FIG. 9C) displayed in accordance with the user's operation (instruction input) of the respective screens of a "Before Starting Recording" screen 210-1 (FIG. 9A), a "During Recording" screen 210-2 (FIG. 9B) and the "During Reproduction" screen 210-3 (FIG. 9C), which are included in the record/reproduction program 202. The screen at the time of operating the record/reproduction program 202 will be described together with enlarged displays or schematic displays for description, with reference to FIGS. 10 to 17, 20 and 22 to 24.

Each of the "Before Starting Recording" screen 210-1, the "During Recording" screen 210-2 and the "During Reproduction" screen 210-3, which are exemplified in FIGS. 9A to 9C and included in the record/reproduction program 202, transitions according to the user's operation (instruction input). While FIGS. 9A, 9B, 9C, 10 to 17, 20 and 22 to 24 show the examples of screen, it goes without saying that control input corresponding to a screen displayed by the LCD 21 can be performed on the touch panel 22.

The "Before Starting Recording" screen 210-1 includes, for example, an index display 227 in either of the right and left of display where the screen 210-1 is displayed by being divided into two (right and left) sections. FIG. 10 illustrates a screen that enlarges FIG. 9A.

The index display 227 of the "Before Starting Recording" screen 210-1 in FIGS. 9A and 10 displays the name of a stored record which has already been recorded.

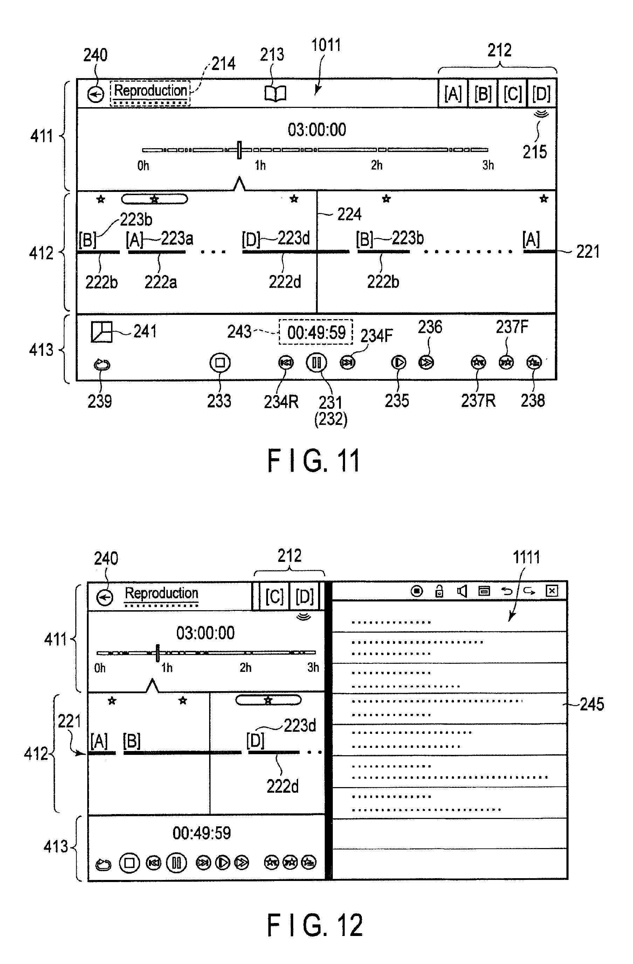

FIG. 11 illustrates a screen that enlarges FIG. 9C. The "During Reproduction" screen 210-3 shown in FIG. 9C and a screen 1011 shown in FIG. 11 include the time bar 211, the locator 211a, the return button 240, etc., in the first display area 411. These screens are not described in detail as being substantially identical with the example of display which has already been described in FIG. 5. The second display area 412 includes, for example, the reproduction location display section 221 which displays the reproduction location (time) of a voice content (voice data), the speech bars 222a, 222b, ..., 222n, the speaker identifiers 223a, 223b, ..., 223n, the current location mark (line) 224, the marking button (star mark) 225, etc. The third display area 413 includes the pause button 231 / the reproduction button 232, the stop button 233, the skip button (forward) 234F, the skip button (return) 234R, the slow reproduction button 235, the fast reproduction button 236, the mark skip button (forward) 237F, the mark skip button (return) 237R, the mark list display button 238, the repeat button 239, etc. The third display area 413 also includes the display switch button 241 with which to input an instruction of display switch to switch the display format of the screen 210 between the screen 210 and a snap view screen, which will be describe later.

When the display switch button 241 is touched or tapped, as shown in FIG. 12, a screen 1111 is divided into two (right and left) sections so that one (for example, left) section displays the first display area 411, the second display area 412 and the third display area 413 while the other (for example, right) section displays a snap view screen 245. The snap view screen 245 sequentially displays, for example, the start and end time of each speech bar of the identified individual speaker.

In FIGS. 9C and 10 to 12, for example, when an optional place in the first display area 411 ([record name, recognized speaker/whole view, status] section) is tapped, a control command that executes the reproduction of voice data near a reproduction time corresponding to the tapped location can be input in the CPU 101 of the PC main body 10.

When the display of an optional place displayed by the second display area ([enlarged view, status] section) 412 is dragged, it is possible to control display and change (set) a reproduction location which are substantially the same as a seek operation. Display methods for identifying a speaker include changing only the display color of displaying a selected speaker. Even when speech is short, the speaker can be identified and displayed in the minimum number of pixels. Further, near the center bottom of the second display area 412 can be displayed a time display 243 which displays the reproduction time or the total time of speech during reproduction (a group of voice) or the total time of speech per speaker where the time of speech of the same speaker is summed.

In the enlarged view (second display area) 412, a control command for performing fine adjustment for a reproduction location can be input by dragging the whole of the enlarged portion from side to side.

At the time of enlarged view, for example, when an enlarged display portion is scrolled by flicking or swiping, the reproduction start location of voice data is automatically adjusted (snapped) to the beginning of speech (voice data) by booting and operating the above-mentioned record/reproduction program 202.

On the screen 1111 shown in FIG. 12, the respective display widths of the first display area 411, the second display area 412 and the third display area 413 are narrowed by displaying the snap view screen 245. If the number of speakers is large so that a part of the speakers cannot be displayed in the speaker display area 212, a ticker may be displayed to prompt the user to scroll the area 212.

FIG. 13 is an example of display of pop-up displaying, as the file list display 251, all the speech bars to which the marking buttons 225 are given, by touching or tapping the mark list display button 238. The file list display 251 to which the marking button 225 is given in FIG. 13 can display a rough location for the number of voice data of marked speakers and the total of time of recording each voice data (display on what time recording is performed for the total time), by touching or tapping the marking button 225 to perform marking.

FIG. 14 is an example of display of a time bar displayed by the "During Reproduction" screen, where the whole length of a display time displayed by the first display area 411 exemplified in FIGS. 9C and 10 to 12 is defined as a quarter-hour (15 minutes). That is, as shown in FIG. 14, by changing the display range of the time bar 211 for the speech of a speaker which is reproduced by approaching the current reproduction location 224 in FIG. 11 (a speech bar 222d and a speaker identification display [D] 223d), the reproduction location of voice data displayed by the corresponding speech bar can be displayed in more detail. On the enlarged view, the whole length of a display time is supposed to be approximately 30 seconds in the display width of the whole of an enlarged portion (whole of side).

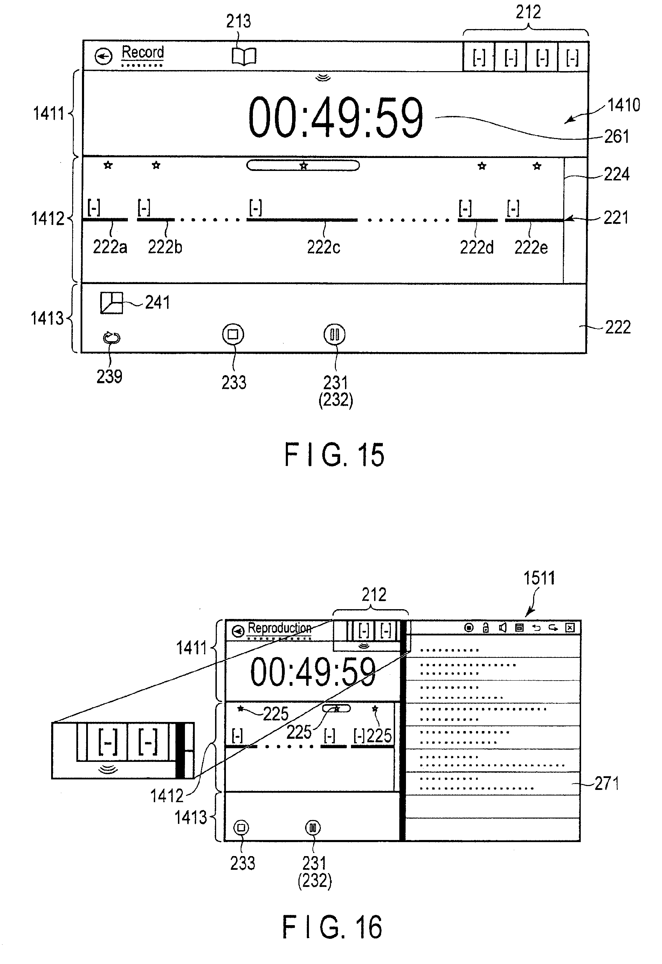

FIG. 15 illustrates a screen that enlarges FIG. 9B. On the "During Recording" screen 210-2 shown in FIG. 9B and a "During Recording" screen 1410 shown in FIG. 15, a first display area 1411 does not have time bar display or locator display and displays a record time (elapsed time) in a record time display section 210-21 (261 in FIG. 15). In this example, it is assumed that the speaker determining unit 323 does not perform speaker determination when recording is made. Therefore, a video signal (display signal) for showing that an operation different from reproduction time is currently performed, such as [-], ..., [-], as output from the feedback processor 330 may be output and displayed in the speaker display area 212 which displays a speaker. On a predetermined location is displayed the list display button 213 for displaying the list display section 227 which can display sound data which has already been recorded, i.e., a recorded list.

A second display area 1412 displays only part of information which can be analyzed in real time even during recording, such as the detection results of the voice sections (speech bars) 222a to 222n. The current location mark (line) 224 which displays a current record time (location) may be compared during reproduction and moved to a predetermined location on the right of the display section 221.

The marking button 225 is displayed substantially near the center of the length direction (time) of the speech bars 223a to 223n. By tapping near the marking button 225, it is possible to perform marking per speech during recording.

A third display area 1413 includes the pause button 231 / a record button 232, the stop button 233, the return button 240, etc. The third display area 1413 includes the display switch button 241 with which to input an instruction of display switch to switch the display format of the screen 210 between the screen 210 and the snap view screen. The pause button 231 and the record button 232 are alternately displayed in a toggle mode every time the buttons are touched or tapped. Accordingly, the recording of speech of a current speaker is started by touching or tapping the record button 232. Also, the pause button 231 is displayed in a state where the speech of a current speaker is recorded by the record button 232. Therefore, when the pause button 231 is touched or tapped, recording is stopped temporarily to display the record button 232.

On a snap view screen exemplified in FIG. 16, a screen 1711 is divided into right and left sections. The first display area 1411, the second display area 1412 and the third display area 1413 may be displayed on the left section. A snap view screen 271 may be displayed on the right section. The snap view screen 271 can sequentially display, for example, the beginning and end time of each of the identified individual voice sections.

It is thereby possible to notify to the user that the number of recorded voice sections is larger than the number of display in the voice section area 1412. If the number of recorded voice sections is large so that a part of the voice sections cannot be displayed in the voice section area 1412, a ticker may be displayed to prompt the user to scroll the area 1412.

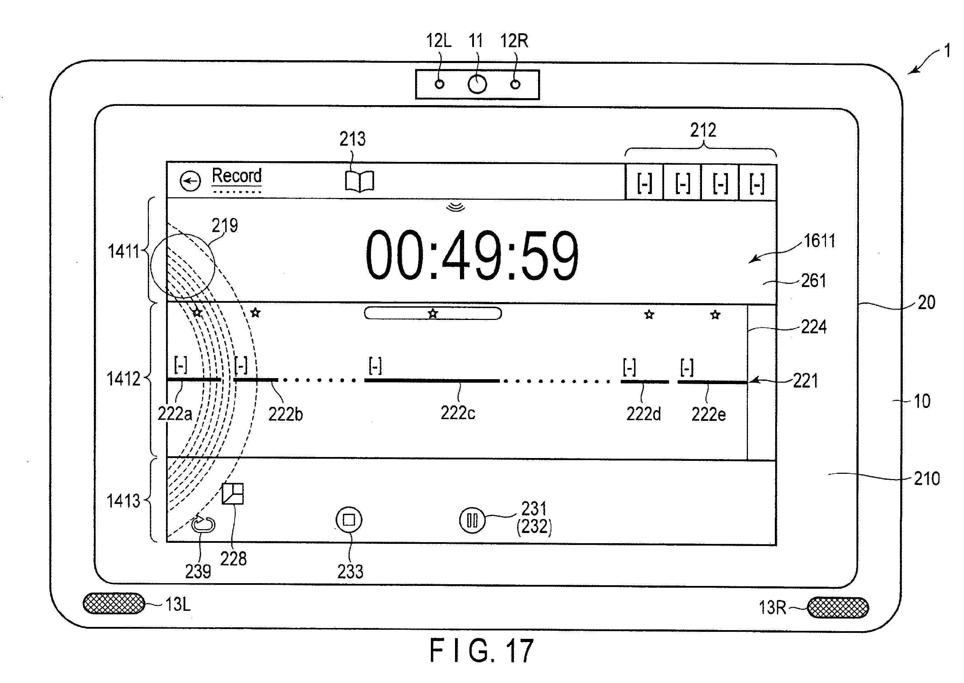

FIG. 17 illustrates another exemplary display of a screen during recording. For example, a speaker direction mark 219 which shows the result of estimating a direction where the input of voice/sound exists, i.e., a direction where a speaker exists, may be displayed on the screen 210 to display a direction where the speaker of detected voice exists.

In the voice sections shown in FIGS. 15 to 17, statistical analysis (cluster analysis) is performed for all of the recorded data to identify a speaker. The identified speaker is updated on the speaker display at the time of display during reproduction.

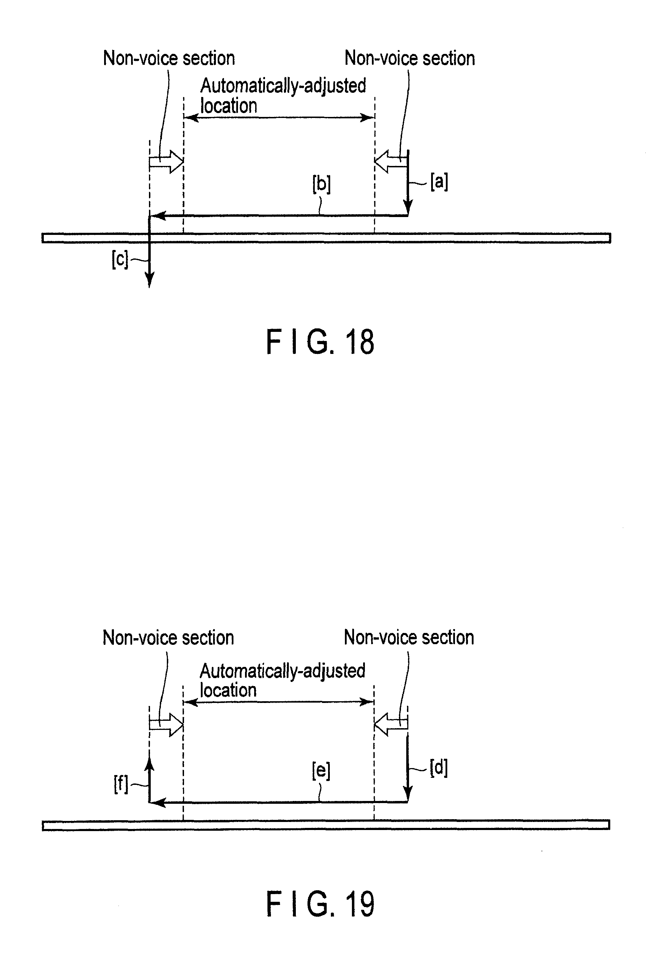

By using a non-voice section detected by the reproduction start location adjustor 322 of the record/reproduction program 202, it is possible to edit recorded sound data as shown in FIG. 18 or 19. FIG. 18 is an exemplary view illustrating deletion of a part of recorded data. FIG. 19 is an exemplary view illustrating cutting (trimming) necessary information of recorded data. That is, it is possible to easily set the beginning of target data in the editing shown in FIG. 18 or 19.

For example, as shown in FIG. 18, a part of recorded data can be deleted by the user's finger movement (instruction input) [a], [b] and [c] of the locator 211a (see FIG. 5), which is provided in a predetermined location of the time bar 211 in FIG. 5.

Firstly, the first movement [a] of the user's finger for the locator 211a of the time bar 211, such as movement toward the time bar 211 from a direction orthogonal to a direction where the time bar 211 extends, is detected.

Secondly, the movement (second operation) [b] of the user's finger on the time bar 211 of the locator 211a is determined as setting operation of a target section.

Thirdly, the content of processing for which the user inputs an instruction is identified based on the movement direction (third operation) [c] of the user's finger.

For example, it is defined as "deletion" if the movement direction of the user's finger is substantially orthogonal to the movement direction of the finger for setting a target section by [b] and if the movement direction is a direction toward the base portion (the base of a screen displayed upright) of image display which is displayed on the display space of the touch panel 22.

At this time, the above-mentioned automatic adjustment is applicable in the respective end locations of the second operation [b] of the user's finger which is identified by the first operation [a] of the user's finger and the third operation [c] of the user's finger.

That is, when deleting a part of sound data displayed on the time axis, the user can easily set non-voice sections at a front and a rear of the target section, as data to be deleted, only by roughly instructing (inputting) on the tine bar 211 displayed on the touch panel 22 the deletion start location (front of the target section) and the deletion end location (rear of the target section). It is thereby possible to intuitively set a deletion section when deleting part of recorded data.

FIG. 19 illustrates an example of cutting (trimming) a part of recorded data by the user's finger movement (instruction input) [d], [e] and [f] of the locator 211a (see FIG. 5), which is provided in a predetermined location of the time bar 211 in FIG. 5.

Firstly, the first movement [d] of the user's finger for the locator 211a of the time bar 211, such as movement toward the time bar 211 from a direction orthogonal to a direction where the time bar 211 extends, is detected.

Secondly, the movement (second operation) [e] of the user's finger on the time bar 211 of the locator 211a is determined as setting operation of a target section.

Thirdly, the content of processing for which the user inputs an instruction is identified based on the movement direction (third operation) [f] of the user's finger.

For example, it is defined as "cutting" (trimming) if the movement direction of the user's finger is substantially orthogonal to the movement direction of the finger for setting the target section by [e] and if the movement direction is a direction toward the upper portion (the top of a screen displayed upright) of image display which is displayed on the display surface of the touch panel 22.

At this time, the above-mentioned automatic adjustment is applicable in the respective end locations of the second operation [e] of the user's finger which is identified by the first operation [d] of the user's finger and the third operation [f] of the user's finger.

That is, when cutting (trimming) a part of sound data displayed on the time axis, the user can easily set non-voice sections at a front and a rear of the target section, as data to be cut (trimmed), only by roughly instructing (inputting) on the tine bar 211 displayed on the touch panel 22 the front (start location) and the rear (end location) of the target section.

It is thereby possible to intuitively set a section subject to cutting (trimming) of necessary information of recorded data.

In the above-mentioned example of processing of FIG. 18 or 19, it is also possible to cut and save all of the previous speech of the same speaker (a plurality of pieces of voice data of the same speaker, whose determined section differ from each other) by relating them to speaker identification, which will be described later. In this case, the user may be allowed to select instruction input as to whether to save only voice data of identified section or to save all of the voice data about the same speaker, for example, by displaying a user interface (UI) screen.

In the above-mentioned embodiment, in a sound record content that displays the result of speaker identification, automatic adjustment may be performed so as to reproduce from the beginning of a voice section whose speaker is identified, according to the display range of a time bar, in addition to an operation of the locator on a time bar.

In the above-mentioned embodiment, in a sound record content that displays the result of speaker identification, automatic adjustment may be performed by buffering sound data near a seek location and performing section determination, according to the display range of a time bar, in addition to an operation of the locator on a time bar.

In the above-mentioned embodiment, in a sound record content that displays the result of speaker identification, automatic adjustment may not be performed according to the display range of a time bar, in addition to an operation of the locator on a time bar.

In the above-mentioned embodiment, the display range of a time bar may be switched by a zoom-in/out operation.

In the above-mentioned embodiment, when a user instruction is input from the touch panel, the zoom-in/out operation may be performed by pinch-in/out, in addition to the normal buttons.

In the above-mentioned embodiment, when a range of performing an editing operation of cutting a sound file, etc., is designated, automatic adjustment may be performed so as to buffer sound data near the designated portion and perform section determination, in addition to an operation of the locator on a time bar. In this case, when the user inputs an instruction from the touch panel, flicking may be available as instruction input of trimming at the time of editing operation (save by cutting).

FIG. 20 shows still another exemplary display of a screen during recording. The "During Recording" screen 1410 does not display a time bar or a locator and instead displays a record time 261 (elapsed time is adopted in this case, although this may be an absolute time) (for example, 00:50:02) in the record time display section 210-21. In this example, the speaker determining unit 358 performs speaker determination in the course of recording. When a voice section is detected in the section determining unit 354, the speaker determining unit 358 can identify the direction of a speaker based on the result of estimating the direction of voice from the difference between the input signals of the microphones 12R and 12L. However, it is necessary to notify in advance to the speaker determining unit 358 the locations of a plurality of speakers. When the speaker is identified, the speaker display area 212 displays the speech mark 215 near the icon of a speaker who is currently speaking.

The second display area 1412 displays the detection results (speech bars) of the voice sections 222a to 222n and an input sound waveform 228, as information for visualizing recording. Recording data is visualized along a time axis where the right end in the figure is current and time gets older to the left. Although not shown in FIG. 20, the speaker identifiers 223a to 223n which show speakers may be displayed near the speech bars 222a to 222n, as with FIG. 5. In addition, the color(s) of the speech bar 222 and/or the speaker identifier 223 may be changed depending on a speaker. Further, although not shown in FIG. 20, each speech can be marked by tapping near the marking button 225 which is displayed near the desired speech bars 2223a to 222n, as with FIG. 5. The lower portion of the second display area 1412 displays a time for every ten seconds.

As described with reference to FIG. 4, bar display is delayed because processing time differs between waveform display by a power calculation result and bar display by an section determination calculation. When both are displayed in the same row so that a current time is displayed on the right end of the screen and time gets older to the left, the waveform 228 is displayed in real time in the right end and the waveform 228 flows to the left of the screen as time passes. The section determining unit 354 performs section determination with the display of the waveform 228, and when a voice section is detected, the waveform 228 is switched to the bar 222. While it is impossible to determine only by waveform display whether power is related to voice or noise, it is possible to confirm the recording of voice also by using bar display. By displaying waveform display of real time and bar display delayed a bit in the same row, the user's line of sight remains in the same row. Since this prevents the line of sight from varying, it is possible to acquire useful information with good visibility.

When a display target is switched from the waveform 228 to the bar 222, the time synchronization processor 356 is provided in order to switch waveform display to bar display gradually, not in a moment. The time synchronization processor 356 displays the waveform/bar transition part 226 between the waveform 228 and the rightmost bar 222d. In the waveform/bar transition part 226, the rightmost displays a waveform, the leftmost displays a bar, and the center gradually changes display from waveform to bar. Current power is thereby displayed as a waveform in the right end so that the display flows right to left. In the process of updating display, a waveform changes continuously or seamlessly and converges on a bar. Therefore, the user does not feel unnatural when observing display.

The third display area 1413 includes the pause button 231 / the record button 232, the stop button 233, the return button 240, etc. The third display area 1413 includes the display switch button 241 with which to input an instruction of display switch to switch the display format of the screen 210 between the screen 210 and the snap view screen exemplified in FIG. 15. The pause button 231 and the record button 232 are alternately displayed in a toggle mode every time the buttons are touched or tapped. Accordingly, the recording of speech of a current speaker is started by touching or tapping the record button 232. Also, the pause button 231 is displayed in a state where the speech of a current speaker is recorded by the record button 232. Therefore, when the pause button 231 is touched or tapped, recording is stopped temporarily to display the record button 232.

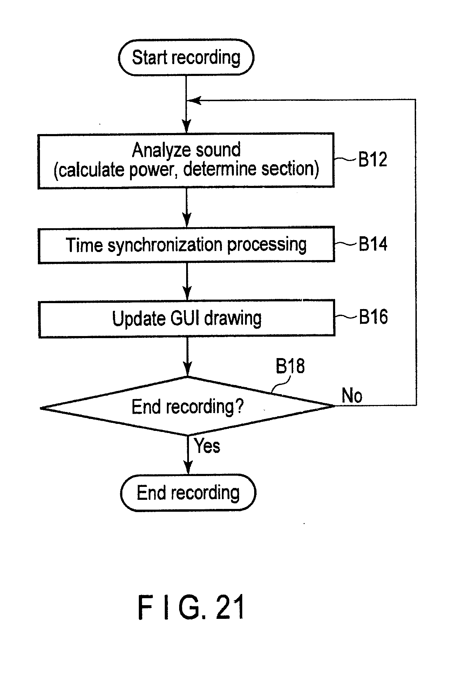

FIG. 21 is a flowchart of the record/reproduction program 202B for displaying the screen of FIG. 20. In block B12, sound data from the microphones 12R and 12L are input to the power calculator 352 and the section determining unit 354 via the audio capture 112. The power calculator 352 calculates, for example, a root mean square for the sound data of a certain time interval and outputs the result as power. The section determining unit 354 performs voice activity detection for sound data to divide the sound data into voice sections where a human generates voice and non-voice sections (noise sections and silent sections) other than voice sections. In block B12, the speaker determining unit 358 identifies the speaker of a voice section determined by the section determining unit 354, based on the difference of voice data from the microphones 12R and 12L.

In block B14, the output of the power calculator 352 and the section determining unit 354 is supplied to the time synchronization processor 356. The time synchronization processor 356 determines a bar display startable timing 229 (for example, 00:49:58) based on the delay time between the outputs of the power calculator 352 and the section determining unit 354. The time synchronization processor 356 gives a control signal to the sound waveform drawer 360 and the voice section drawer 362 so that the waveform/bar transition part 226 is displayed in an section of several seconds between the beginning of a timing of a voice section including a bar display startable timing and the bar display startable timing 229.

In block B16, the sound waveform drawer 360 and the voice section drawer 362 update the second display area 1412 shown in FIG. 20. That is, the display of the display area 1412 is shifted to the left and the waveform of a current time is displayed in the right end. The display of the third display area 1413 and the record time display section 261 are controlled by the feedback processor 330 as with FIG. 5.

In block B18, it is determined whether to stop recording. The above-mentioned processing is then repeated until recording is stopped and the display continues to be updated. Recording stop is instructed by the pause button 231 or the stop button 233.

The record/reproduction program 202B may include a voice recognition unit and may recognize the initial voice of a voice section and display the result of recognition as text below the speech bar 222, as shown in FIG. 20. This improves convenience when a voice section is marked for finding the beginning of the reproduction.

According to the display of FIG. 20, voice visualization such as display of power, display of a voice section, marking of speaker information of a voice section, marking of the speech content of a voice section, marking of a necessary voice content, etc., is performed so that the user can acquire useful information. For example, it is possible to reproduce only the important point of a recorded content during reproduction by marking the important point. Also, when a waveform is not displayed though the user is speaking, it is possible to prevent failure of recording by adjusting the installation location and angle of a microphone (device) and by checking the microphone setting such as gain and noise suppression level. Similarly, when a speech bar is not displayed (a voice section is not detected) though a waveform is displayed, it is possible to prevent failure of recording by adjusting the installation location and angle of a microphone (device) and by checking the microphone setting such as gain and noise suppression level. Further, the user can feel secure if a waveform, a speech bar, etc., is displayed during recording. While the above-mentioned determination of recording failure is based on the user's visual observation on a screen, when a voice section is not detected even if a waveform is input for more than a predetermined time, the record/reproduction program 202B may judge it as failure of recording to display and output an alarm.

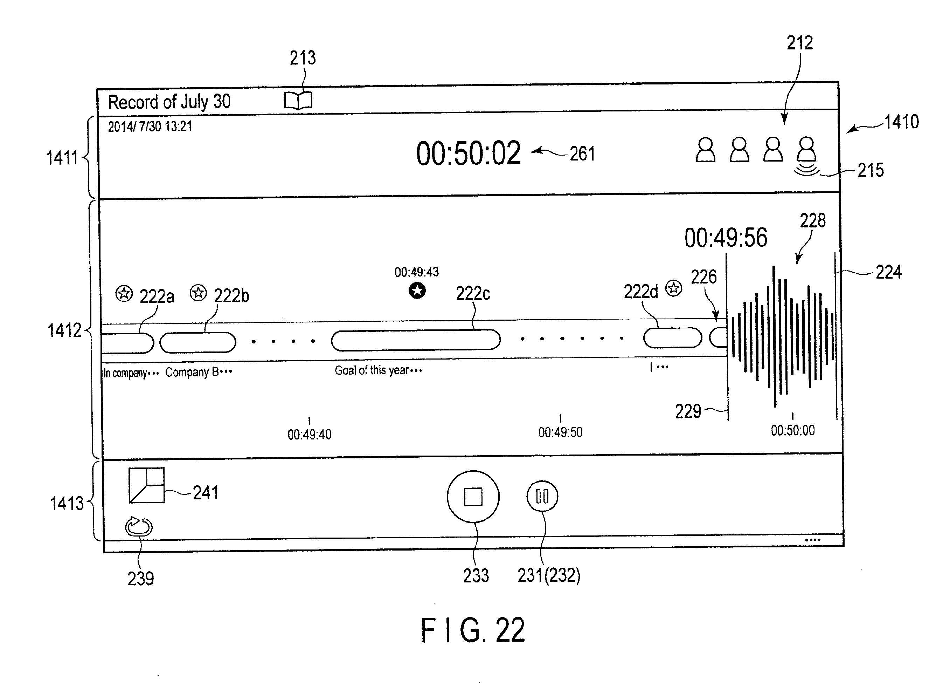

While waveform display is immediately switched to section display upon detecting a voice section in the above description, it may also be possible to delay the beginning of section display from the bar display startable timing 229 so that the period of waveform display is prolonged accordingly. Further, while waveform display is gradually switched to bar display in the above description, waveform display may be immediately switched to bar display. The example of this display will be shown in FIG. 22. That is, the waveform/bar transition part 226 may be omitted by ending waveform display at the bar display startable timing 229 (00:49:56) when the section determining unit 354 detects a voice section and by performing section display before the timing. In this case, section display may be started at any timing prior to the bar display startable timing.

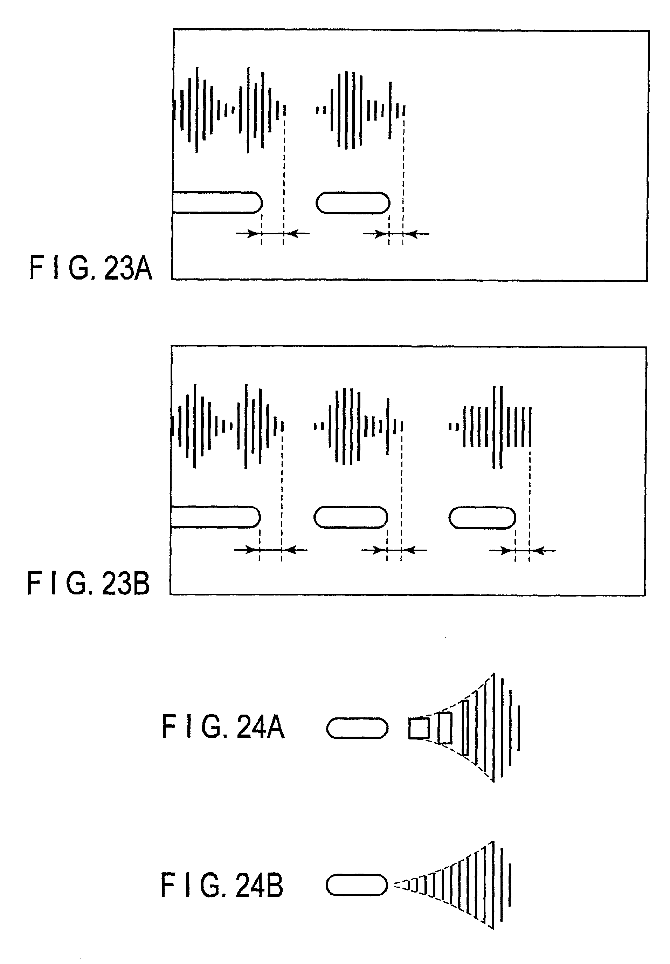

Power display and section display may not necessarily be performed in the same row. For example, a waveform and a bar may be displayed separately in two rows. While a current time is always fixed to the right end on the screen of FIG. 20, a current time in FIGS. 23A and 23B initially exists in the left end and moves to the right as time passes. FIG. 23B is temporally later than FIG. 23A. That is, a current waveform is sequentially added to the right. When a current time reaches the right end, the display flows from right to left as with FIG. 20. When a waveform is displayed in the first row and a bar is displayed in the second row, the bar is displayed later than the waveform.

In addition, the display form of sound power is not limited to waveform display. In FIGS. 23A and 23B, power may be displayed on a certain window as a numeric value, not as a waveform. Moreover, this window may not be fixed to a certain location and may instead be set as the right end of waveform display of FIGS. 23A and 23B so as to move to the right as time passes.

FIGS. 24A and 24B show a modified example of the example of display of the waveform/bar transition part 226. While in FIG. 24A, which is the same as FIG. 20, display is transitioned so that a waveform converges on the height of a bar of the beginning of the timing of a voice section which includes a bar display startable timing, display may be transitioned so that a waveform converges to zero level as shown in FIG. 24B. Also, while the display form is continuously transitioned from a waveform to a bar, it may be transitioned gradually to a certain extent. Further, while a waveform is displayed as a vibration bar of a certain interval (bar in a vertical direction), it may be displayed as an envelope of power.

While the above description assumes an audio recorder, it is also applicable to a video camera that records audio. The same visualization as above may be performed by extracting audio data from a video signal that is output from a video camera. In this case, the face of a speaker may be displayed near a speech bar by analyzing video to acquire the video of the speaker.

In the following, the function of the record/reproduction program 202 and the image display corresponding to the display surface of the touch panel 22 will further be described. The example of display at the time of operating the record/reproduction program 202 and the functions corresponding to the respective displays are as follows:

```
 [Before Recording]
      [Main Screen]
           [Display List of Recorded Files]
          A list of recorded files are displayed.
           - Name of file (name of meeting)
           - Recorded time and date (yyyy/mm/dd)
           (hh:mm:ss - hh:mm:ss)
          - Recorded time (hh:mm:ss)
          - File protect mark.
           [Share Recorded File]
          A recorded file can be shared.
           [Input Name of Meeting]
          The name of a meeting can be input in advance
          before recording starts.
           [Display Application Bar]
          "Application Bar" is displayed in a
          predetermined location of the lower portion of a
          display screen.
           [New Recording Button]
          Recording is started.
           [Display Remaining Capacity of Recordable
           Time]
          Recordable time is displayed from storage
          remaining capacity (hh:mm:ss).
           [Sort Function]
          Recorded files can be sorted in the following
          items:
          - Sort by date and time (from newest or from
          oldest)
          - Sort by name
           - Sort by the number of participants (from
 largest or from smallest).
           [Display Description of How to Use]
           The description of how to use is displayed.
           [Display Enlarged View]
           A display bar in line form where switching of
 speakers can be recognized in real time is displayed.
      [Application Bar]
           [Delete (Selected File)]
           A (selected) recorded file is deleted.
           [Select File]
           A list of recorded files is selected in a
 select mode.
           [Export]
           A selected file is exported to a
           predetermined folder.
           [Edit]
           The following items of a recorded file can be
 edited:
           - The title of a meeting
           - The number of participants.
           [Unselect]
           A selected file is unselected.
           [Reproduction]
          A selected file is reproduced.
           [Select All]
          All the recorded files are selected.
      [Others]
           [Tablet Operation Sound On/Off]
           Toggle button mode where On/Off is
           alternately switched:
          The sound of a pen touching, keyboard typing,
          etc., is suppressed.
           [Noise Elimination On/Off]
          Toggle button mode where On/Off is
          alternately switched:
          The sound of air-conditioning, a PC fan,
 etc., is suppressed.
           [Pre-recording On/Off]
           Recording is made by tracing back to data
 before the recording start button is pressed.
           [Microphone Gain Control Auto/Manual]
           Toggle button mode where Auto/Off is
 alternately switched:
           Automatic adjustment of microphone gain can
 be set.
           [Help]
           A help file is displayed.
           [Version Information]
           The version of an application is displayed.
 [During Recording]
      [Main Screen]
           [Display Name of Meeting]
           The name of a meeting that has
 been determined on a screen before recording is
 displayed.
           [Edit/Correct Name of Meeting]
           The name of a meeting can be edited.
           [Display Meeting Participants]
           Participants are displayed alphabetically.
           [Display Marking Button]
           A marking button is tapped to mark the speech
 section.
           [Stop by Stop Button]
           Transition is made to a recording stop
           screen, a screen after stopping recording and a screen
           before recording.
           [Pause Recording by Record Button]
           Recording is paused.
           [Restart Recording by Record Button]
           Recording is restarted.
           [Automatic Stop when Remaining Capacity of
           Recording Time is Small]
          Automatic stop is performed when the
 remaining capacity of recordable time is small:
           - It is notified to the user by pop-up that
 recording is to be stopped before automatically
 stopped.
           [User Notification (Toast)]
           Notification is made to the user in the
 following operations:
           - When little recordable time is left
           - Notification during background recording
           (a message saying "during recording" and a
 recorded time are regularly displayed).
           [Screen for Confirming/Selecting Number of
           Meeting Participants]
           The user is allowed to select the number when
 recording ends:
           - Two or three persons spoke
           - Three to five persons spoke
           - Six or more persons spoke.
           [Display Recording Elapsed Time]
          A recording elapsed time (hh:mm:ss) is
          displayed.
           [Display Enlarged View]
           Speakers are displayed alphabetically at the
           time of enlarged view.
      [Application Bar]
           [Edit]
          The name of a meeting and the number of
          participants can be edited.
     [Snap Display]
           [Display Meeting Participants]
          Meeting participants are described
          alphabetically.
     [Background]
           [Notify Regularly by Toast]
          Notification is made regularly to prevent
          forgetting to stop recording.
 [During Reproduction]
      [Main Screen]
           [Display Name of Meeting]
           The name of a meeting is displayed.
           [Edit/Correct Name of Meeting]
           The name of a meeting can be edited and
 corrected.
           [Display Meeting Participants]
          Meeting participants are displayed
          alphabetically.
           [Reproduction Button]
          Reproduction is started.
           [Pause Reproduction]
          Reproduction is paused.
           [Stop by Stop Button]
          By setting, it is possible to stop or close a
          file after stopping.
           [Slow Reproduction Button]
          Slow reproduction is performed
           (0.5-times speed/0.75-times speed).
           [Fast Reproduction Button]
          Fast reproduction is performed
           (1.25-times speed/1.5-times speed/1.75-times
           speed/2.0-times speed).
           [Button Selected from List of Markings]
          A list of marked files are displayed.
           [Mark Skip Button]
          Skip reproduction is performed for a marking
          button.
           [Display Time of Reproduction Location]
          The time of a reproduction location is
          displayed.
           [Display Recorded Time]
          A recorded time is displayed.
           [Skip Button]
          Jump to the previous or next speech section
          by a button operation.
           [Display Repeat Button]
           Repeat reproduction is performed by a button
           operation.
           [Return Button]
           Return to a recording start screen.
           [Display Only Particular Speaker]
           The speech of a particular speaker is
           reproduced in the following conditions:
           - Only the speech of a selected participant
           from an enlarged view is displayed
           - Only the speech of a particular speaker (a
           plurality of speakers may be selected) is reproduced.
           [Time Scale]
          The scale of actual time is displayed.
           [Display Seek Bar (Locator) for Speech during
           Reproduction]
          A location currently reproduced is displayed.
           [Scroll (Move) Seek Bar (Locator) for Speech
           during Reproduction]
          A scrolled (moved) reproduction location is
          sought.
           [Display Whole View]
          The whole view of a recorded content is
          displayed.
           [Fine Adjustment of Reproduction Location]
          The reproduction location of the whole view
          is adjusted by a swipe operation.
           [Enlarged Display Frame of Reproduced
           Portion]
          An enlarged frame that shows near a portion
          currently reproduced is displayed.
           [Display Enlarged View]
          Speakers are displayed alphabetically at the
          time of enlarged view.
           [Display Marking Button]
          A marking button is tapped to mark the speech
          section.
           [Export Marking Button]
           Marking buttons displayed as a list are
 selected and exported.
      [Application Bar]
           [Silent Activity Skip On/Off]
           Setting of skip On/Off of a silent section is
 made.
           [Reproduction Only Particular Speaker]
           Only the speech of a particular speaker is
 reproduced.
           [Edit]
           The name of a meeting and the number of
 participants can be edited.
      [Snap Display]
           [Display Meeting Participants]
           Meeting participants are described
 alphabetically.
      [General (Others)]
           [Screen Rotation]
           Corresponding to landscape/portrait.
           [Background Recording]
           Recording continues even when the application
           transitions to the background.
           [Scaling of Snap Screen]
          The application is displayed as snap.
```

## Claims

1. An electronic device **characterized by** comprising:
circuitry configured to display, during recording, a first mark (228) indicative of a sound waveform collected from a microphone and a second mark (222) indicative of a section of voice collected from the microphone, after processing to detect the section of voice.

2. The electronic device of Claim 1, **characterized in that**
the first mark (228) indicates the sound waveform collected from the microphone during a first period set by tracing back from a current time,
the second mark (222) indicates a first section of voice collected from the microphone prior to a start time of the first period, and
the first mark (228) and the second mark (222) are displayed on a same axis.

3. The electronic device of Claim 1, **characterized in that**
the second mark (222) indicates a second section of voice collected from the microphone, different from the first section of voice collected from the microphone,
the circuitry is further configured to display, first information identifying a first speaker of the first section of voice and second information identifying a second speaker of the second section of voice together with the second mark (222), and
the first speaker and/or the second speaker is identified by an estimation of a direction of voice.

4. The electronic device of Claim 1, **characterized in that**
the second mark (222) indicates a plurality of sections of voice collected from the microphone and any of the plurality of sections of voice is selectable as the first section of voice during recording, and
the circuitry is further configured to, when displaying the plurality of sections of voice after recording, identifiably display the first section of voice and the other sections of voice of the plurality of sections of voice, and
a sound signal comprising at least the first section of voice is reproducible when the first section of voice is designated.

5. A method **characterized by** comprising:
displaying a first mark (228) indicative of a sound waveform collected from a microphone; and
displaying a second mark (222) indicative of a section of voice collected from the microphone, after processing to detect the section of voice.

6. The method of Claim 5, **characterized in that**
the first mark (228) indicates the sound waveform collected from the microphone during a first period set by tracing back from a current time,
the second mark (222) indicates a first section of voice collected from the microphone prior to a start time of the first period, and
the first mark (228) and the second mark (222) are displayed on a same axis.

7. The method of Claim 5, **characterized in that**
the second mark (222) indicates a second section of voice collected from the microphone, different from the first section of voice collected from the microphone, and
the method further comprising
displaying, first information identifying a first speaker of the first section of voice and second information identifying a second speaker of the second section of voice together with the second mark (222), wherein the first speaker and/or the second speaker is identified by an estimation of a direction of voice.

8. The method of Claim 5, **characterized in that**
the second mark (222) indicates a plurality of sections of voice collected from the microphone and any of the plurality of sections of voice is selectable as the first section of voice during recording, and
the method further comprising, when displaying the plurality of sections of voice after recording, identifiably display the first section of voice and the other sections of voice of the plurality of sections of voice, wherein a sound signal comprising at least the first section of voice is reproducible when the first section of voice is designated.

9. A non-transitory computer readable storage medium having stored thereon a computer program which is executed by a computer, the computer program controlling the computer to execute functions of:
displaying a first mark (228) indicative of a sound waveform collected from a microphone; and
displaying a second mark (222) indicative of a section of voice collected from the microphone, after processing to detect the section of voice.

10. The storage medium of Claim 9, **characterized in that**
the first mark (228) indicates the sound waveform collected from the microphone during a first period set by tracing back from a current time,
the second mark (222) indicates a first section of voice collected from the microphone prior to a start time of the first period, and
the first mark (228) and the second mark (222) are displayed on a same axis.

11. The storage medium of Claim 9, **characterized in that**
the second mark (222) indicates a second section of voice collected from the microphone, different from the first section of voice collected from the microphone, and
the computer program controlling the computer to further execute functions of:
displaying, first information identifying a first speaker of the first section of voice and second information identifying a second speaker of the second section of voice together with the second mark (222), wherein the first speaker and/or the second speaker is identified by an estimation of a direction of voice.

12. The storage medium of Claim 9, **characterized in that**
the second mark (222) indicates a plurality of sections of voice collected from the microphone and any of the plurality of sections of voice is selectable as the first section of voice during recording, and
the computer program controlling the computer to further execute functions of:
when displaying the plurality of sections of voice after recording, identifiably display the first section of voice and the other sections of voice of the plurality of sections of voice, wherein a sound signal comprising at least the first section of voice is reproducible when the first section of voice is designated.
